# EUROPEAN PATENT APPLICATION

(11) **EP 2 181 886 A2**
(43) Date of publication of application: **05.05.2010**
(21) Application number: 09173703.1
(22) Date of filing: 22.10.2009
(51) Int. Cl.: B60N 2/235

(54) **Seat reclining apparatus**

(30) Priority: 31.10.2008 JP 2008282053
(71) Applicant: FUJI KIKO Co., Ltd., Kosai-shi, Shizuoka 431-0431 (JP)
(72) Inventor: Ohba, Tetsuya, Kosai-shi Shizuoka 431-0431 (JP)
(74) Representative: Grünecker, Kinkeldey, Stockmair & Schwanhäusser Anwaltssozietät

(57) **Abstract**

A seat reclining apparatus includes: a fixing member; a pivot member having an internal tooth located on an inner circumference surface of the circular recessed portion; a lock tooth having an external tooth arranged to be engaged with the internal tooth of the pivot member, the lock tooth being arranged to be moved along an orbit between an engagement position and a disengagement position; a cam; an urging member; the lock tooth including a pair of guide protrusions which are disposed on both sides of the lock tooth, and which protrude axially toward the fixing member, and the fixing member including a pair of guide grooves formed on an inside surface of the fixing member, and arranged to receive, respectively, the guide protrusions of the lock tooth to guide the lock tooth along the orbit between the engagement position and the disengagement position.

## Description

### BACKGROUND OF THE INVENTION

This invention relates to a seat reclining apparatus which has a large rotational strength, and which is designed so as not to decrease the rotational strength even when an external size decreases.

A seat reclining apparatus for a vehicle includes a recliner disposed between a seat cushion and a seat back arranged to be moved with respect to the seat cushion.
The seat reclining apparatus includes a cushion side arm provided to the seat cushion, and a back side arm provided to the seat back. The cushion side arm is pivotally connected with the back side arm.

For decreasing sizes (thicknesses) of the seat cushion and the seat back, it is requested that widths of the cushion side arm and the back side arm decreases. For attaining these object, it is requested that an external size (outside diameter) of the recliner decreases. However, it is requested that a strength to restrict the pivot movement is held to a strength identical to a conventional recliner even when the external size decreases. It is necessary that a portion to restrict the pivot movement of the recliner has a sufficient strength.

U.S. Patent No. 6,612,053 (Japanese Patent Application Publication No. 2002-521165) shows a conventional seat reclining apparatus including a housing 12 connected with one of a cushion side arm and a back side arm; three claws 16 swingably received within the housing 12; and a cam 18 arranged to push the claws 16 to swing the claws 16. When the cam 18 pushes the claws 16 to swing the claws 16, tooth surfaces 40 of the claws 16 are engaged with tooth 60 formed on an inner circumference surface of a cover plate 14 connected with the other of the cushion side arm and the back side arm, so that the cover plate 14 is locked with respect to the housing 12. Consequently, the back side arm is locked. When the large force is acted to pivot the cover plate 14, the force is acted to pivot the claws 16. A pivot protruding portion 30 or a guide protruding portion 32 (inside surface raised portion) restricts the pivot movements of the claws 16. On the other hand, the relative pivot movement between the housing 12 and the cushion side arm or the back side arm is restricted by three circular protruding portions (outside surface raised portions) which protrude from the outside surface of the housing 12, and which are mounted in mounting holes formed in the cushion side arm or the back side arm. That is, the relative pivot movement between the housing 12 and the cover plate 14 is restricted through the claws 16 by the inside surface raised portion. The relative pivot movement between the housing 12 and the cushions side arm or the back side arm is restricted by the outside surface raised portion.

### SUMMARY OF THE INVENTION

However, in the above-described seat reclining apparatus, the inside surface raised portion and the outside surface raised portion are formed by the embossing. The inside surface raised portion and the outside surface raised portion can not superimposed in the same position on the inside surface and the outside surface of the single circle. Only one of the inside surface raised portion and the outer surface raised portion is formed. Accordingly, even when an area of a portion of the inside surface raised portion increases to increase the rotational strength, the outside surface raised portion becomes small by the increasing area of the inner surface raised portion. These sizes are limited.

It is an object of the present invention to provide a seat reclining apparatus devised to solve the above mentioned problem, and to increase a strength of a rotation.

According to one aspect of the present invention, a seat reclining apparatus comprises: a fixing member connected with one of a seat cushion and a seat back pivotally fixed to the seat cushion; a pivot member connected with the other of the seat cushion and the seat back, and arranged to be pivoted relative to the fixing member, the pivot member including a circular recessed portion having an internal tooth located on an inner circumference surface of the circular recessed portion; a lock tooth disposed between the pivot member and the fixing member, the lock tooth having an external tooth arranged to be engaged with the internal tooth of the pivot member, the lock tooth being arranged to be moved along an orbit between an engagement position in which the external tooth of the lock tooth is engaged with the internal tooth of the pivot member, and a disengagement position in which the external tooth of the lock tooth is disengaged from the internal tooth of the pivot member; a cam arranged to rotate in a lock direction to lock the pivot movement of the pivot member relative to the fixing member to push the lock tooth along the orbit to engage the external tooth of the lock tooth with the internal tooth of the pivot member, and to rotate in a lock release direction to release the lock of the pivot movement of the pivot member relative to the fixing member; an urging member arranged to urge and rotate the cam in the lock direction; and an operation lever arranged to rotate the cam in the lock release direction against the urging force of the urging section, the lock tooth including a pair of guide protrusions which are disposed on both sides of the lock tooth, and which protrude axially toward the fixing member, and the fixing member including a pair of guide grooves formed on an inside surface of the fixing member, and arranged to receive, respectively, the guide protrusions of the lock tooth to guide the lock tooth along the orbit between the engagement position and the disengagement position.

### BRIEF DESCRIPTION OF THE DRAWINGS

FIG. 1A is a view as viewed from an arrow A-A of FIG. 1B. FIG. 1B is a partially cutaway front view showing a seat reclining apparatus according to a first embodiment of the present invention.

FIG. 2 is an external view showing the seat reclining apparatus of FIG. 1B.

FIG. 3A is a view as viewed from an arrow B-B of FIG. 3B. FIG. 3B is a partially cutaway front view showing a seat reclining apparatus according to a second embodiment of the present invention.

FIG. 4A is a view as viewed from an arrow C-C of FIG. 4B. FIG. 4B is a partially cutaway front view showing a seat reclining apparatus according to a third embodiment of the present invention.

FIG. 5 is a partially cutaway front view showing a seat reclining apparatus according to a fourth embodiment of the present invention, as viewed from an arrow E-E of FIG. 6.

FIG. 6 is a view showing the seat reclining apparatus of FIG. 5, as viewed from an arrow D-D of FIG. 5.

FIG. 7 is an exploded perspective view showing the seat reclining apparatus of FIG. 5.

FIG. 8A is an enlarged view showing guide grooves of the seat reclining apparatus of FIG. 5. FIG. 8B is an enlarged view showing a lock tooth of the seat reclining apparatus of FIG. 5.

FIG. 9 is a sectional view showing a main part of the seat reclining apparatus of FIG. 5.

FIG. 10 is a partially cutaway view showing a seat reclining apparatus according to a fifth embodiment of the present invention.

### DETAILED DESCRIPTION OF THE INVENTION

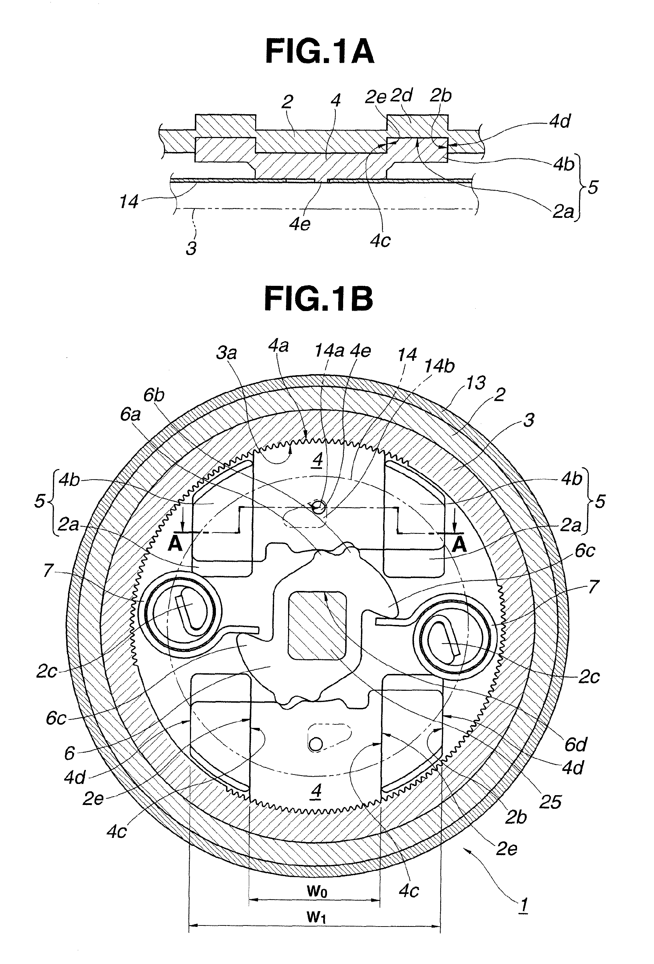

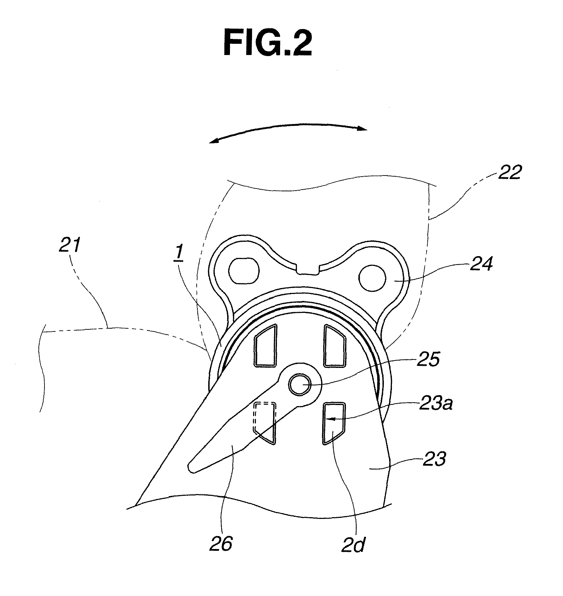

Hereinafter, seat reclining apparatuses according to embodiments of the present invention are illustrated.
The seat reclining apparatuses according to first to third embodiments are slide type. The seat reclining apparatuses according to fourth to fifth embodiments are swing type.
[First Embodiment] FIG. 1A is a view as viewed from an arrow A-A of FIG. 1B. FIG. 1B is a partially cutaway front view showing a seat reclining apparatus according to a first embodiment of the present invention. FIG. 2 is an external view showing the seat reclining apparatus of FIG. 1B. A vehicle is provided with a seat shown in FIG. 2. That is, there are provided with a seat cushion 21 which is a sitting portion (bottom portion), and a seat back 22 arranged to be pivoted relative to the seat cushion 21 in forward and rearward directions of the vehicle. The seat cushion 21 is connected through a base plate 23 with a fixing member of the recliner 1. The seat back 22 is connected through an arm plate 24 with a movable member (pivot member) of the recliner 1. Moreover, there are provided springs (not shown) arranged to urge and incline the seat back 22 relative to the seat cushion 21 in the forward direction of the vehicle (in a leftward direction of FIG. 2).

A structure of the recliner 1 is shown in FIGS. 1A and 1B. The recliner 1 includes a fixing member 2 which is shaped like a substantially circular disk, and which has a circular recessed portion located inside the fixing member 2; and a pivot member 3 pivotally mounted in the circular recessed portion of the fixing member 2. The pivot member 3 includes a circular recessed portion having an internal tooth 3a located on an inner circumference surface of the circular recessed portion. The fixing member 2 and the pivot member 3 are surrounded by a ring-shaped holder 13, and arranged to be pivoted relative to each other, and not to be moved relative to each other in the axial direction.

The recliner 1 includes a cam 6 disposed at a substantially central position of the circular recessed portion of the fixing member 2 and the circular recessed portion of the pivot member 3. The recliner 1 includes a pair of lock teeth 4 disposed radially between the cam 6 and the internal tooth 3a of the pivot member 3. Each of the lock teeth 4 includes an external tooth 4a arranged to be engaged with the internal tooth 3a of the pivot member 3. The recliner 1 includes guide sections 5 each arranged to guide one of the lock teeth 4 in an orbit (line, path) between a position in which the external tooth 4a of the one of the lock teeth 4 is engaged with the internal tooth 3a of the pivot member 3, and a position in which the external tooth 4a of the one of the lock teeth 4 is disengaged from the internal tooth 3a of the pivot member 3, and in an orbit along the radial direction of the fixing member 2.

The guide sections 5 are illustrated below. Each of the lock teeth 4 includes a pair of guide protrusions 4b which serve as the guide section 5, which are disposed on both sides of the external tooth 4a of one of the lock teeth 4 to sandwich the external tooth 4a, and which protrude axially toward the fixing member 2. The guide protrusions 4b are located outside a tooth width W0 of a portion in which the external tooth 4a of the lock tooth 4 is formed. Therefore, each lock tooth 4 has a total width W1 larger than the tooth width W0. The fixing member 2 includes two pair of guide grooves 2a which serve as the guide section 5, which are formed on an inside surface of the fixing member 2 by embossing, and which are arranged to receive, respectively, the guide protrusions 4b, and to guide the lock tooth 4. Each of the guide protrusions 4b includes a side surface 4c and a side surface 4d which are substantially in parallel with each other. Each of the guide grooves 2a includes an inner wall 2b and inner wall 2e.
The side surfaces 4c and 4d of each of the guide protrusions 4b slidably contact, respectively, the inner walls 2e and 2b of one of the guide grooves 2a. Consequently, the pair of the side surfaces 4c and 4d of each guide protrusion 4b and the inner walls 2b and 2e of the one guide groove 2a serve as guide surfaces. With this, the lock tooth 4 is arranged to be guided by these guide surfaces, and to be moved in a linear orbit along the radial direction of the fixing member 2. It is difficult that each of the four pair of the pair of parallel guide surfaces slidably contact each other due to variation of size. Accordingly, the wobble may be generated. Therefore, clearance between the guide surfaces are set so that the (inside) side surfaces 4c of the pair of the guide protrusions 4b always contact, respectively, the (inside) inner walls 2e of the pair of the guide grooves 2a (the inside guide surfaces of the guide protrusions 4b and the inside guide surfaces of the guide grooves 2a always contact each other), or so that the (outside) side surfaces 4d of the pair of the guide protrusions 4b always contact, respectively, the (outside) inner walls 2b of the pair of the guide grooves 2a (the outside guide surfaces of the guide protrusions 4b and the outside guide surfaces of the guide grooves 2a always contact each other). With this, it is possible to prevent the generation of the wobble.

The recliner 1 includes the cam 6 arranged to push the pair of the lock teeth 4 in the radially outward direction along the linear orbit, thereby to engage the external teeth 4a of the lock teeth 4 with the internal tooth 3a of the pivot member 3, and to lock the pivot movement of the pivot member 3 relative to the fixing member 2. The cam 6 includes pushing portions 6a arranged to push back surfaces of the pair of the lock teeth 4 with the external teeth 4a; and rotation prevention portions 6b. Each of the rotation prevention portions 6b is arranged to restrict one of the lock teeth 4 from pivoting and inclining around the pushing portion 6a when the external force is acted to the pivot member 3 and thereby the rotational force is acted to the one of the lock teeth 4. Moreover, the recliner 1 includes a pair of spiral springs 7 each serving as an urging member arranged to urge and rotate the cam 6 in a lock direction (in a counterclockwise direction of FIG. 1). Each of the spiral springs 7 includes a first end portion fixed to and hung around a spring hanging raised portion 2c protruding from the inside surface of the fixing member 2; and a second end portion hung by a spring hanging raised portion 6c arranged on the cam 6 at regular intervals of 180 degrees.

The recliner 1 includes a release plate 14 disposed axially between the cam 6 and the pivot member 3, and arranged to return these lock teeth 4 in the radially inward direction. The release plate 14 is integrally connected with the cam 6. The release plate 14 includes substantially rectangular cam holes 14b each having a cam surface 14a. Each of the cam hole 14b receives a protruding portion 4e protruding from the lock tooth 4 in the axial direction. Therefore, the pair of the lock teeth 4 are returned in the radially inward direction when the release plate 14 is pivoted in the clockwise direction.

The cam 6 includes a substantially rectangular central hole 6d. An operation shaft 25 shown in FIG. 2 is mounted in the central hole 6d. The operation shaft 25 is provided with an operation lever 26. This operation lever 26 is provided for rotating the cam 6 and the release plate 14 in the clockwise direction against the urging force of the spiral springs 7 to release the lock. The operation shaft 25 penetrates central holes (not shown) provided at central portions of the fixing member 2 and the pivot member 3. The operation shaft 25 is pivotally supported.

As mentioned above, the guide grooves 2a are formed on the inside surface of the fixing member 2 by the embossing. Consequently, raised portions 2d are formed on the outside surface of the fixing member 2. When the fixing member 2 is connected with (mounted to) the cushion side arm 23 of the seat cushion 21, the raised portions 2d are mounted, respectively, in mounting holes 23a of the cushion side arm 23, so that the raised portions 2d serve as rotation prevention portions. It is optional to provide another rotation prevention portion which is different from the raised portion 2d, and which protrudes outwards between the pair of the raised portions 2d of the fixing member 2.

It is requested that the pivot member 3 with the internal tooth 3a, the lock teeth 4 with the external teeth 4a, and the cam 6 have the hardness (rigidity). Therefore, the pivot member 3, the lock teeth 4 and the cam 6 are hardened by heat treating such as quenching. On the other hand, it is requested that the guide surfaces of the fixing member 2 have accuracy. Therefore, the fixing member 2 is not hardened by the heat treating.

(Operation) Next, the operation of the seat reclining apparatus is illustrated. In the seat reclining apparatus according to the first embodiment of the present invention, the cam 6 is pivoted in the counterclockwise direction of FIG. 1 by the urging force of the spiral springs 7, and the lock teeth 4 are pushed radially outwards. That is, the pair of the guide protrusions 4b of each lock tooth 4 are moved, respectively, along the pair of the guide grooves 2a of the fixing member 2, and the external teeth 4a of the lock teeth 4 are engaged with the internal tooth 3a of the pivot member 3. Consequently, the pivot member 3 is locked with respect to the fixing member 2. When the external force is acted, in the lock state, to the pivot member 3 to pivot the pivot member 3 relative to the fixing member 2, the pivot movement of the pivot member 3 is transmitted through the engaging portions to the lock teeth 4. Each of the lock teeth 4 includes the pair of the guide protrusions 4b. The side surfaces 4c and 4d of each guide protrusion 4b are supported, respectively, by the inner walls 2e and 2b of one of the guide grooves 2a. In this case, the shearing force is acted to the guide protrusions 4b. On the other hand, the compression force is acted to the fixing member 2. As mentioned above, the lock teeth 4 with the external tooth are hardened by the heat treating such as the quenching. Each of the lock teeth 4 has a strength larger than a strength of the fixing member 2. Accordingly, it is possible to have the sufficient strength with respect to the shearing force. On the other hand, the only compression force is acted to the fixing member 2 through the inner walls 2b and 2e of the guide grooves 2a of the fixing member 2. Accordingly, the fixing member 2 has a sufficient strength with respect to the compression force. In the external force acted through the lock teeth 4, the side surface 4c of one of the guide protrusions 4b is supported by the inner wall 2e of one of the guide grooves 2a, and the side surface 4d of the other of the guide protrusions 4b is supported by the inner wall 2b of the other of the guide grooves 2a. Consequently, the pair of the guide protrusions 4b of the lock tooth 4 are supported by the pair of the guide grooves 2a of the fixing member 2. Therefore, it is possible to considerably improve the rotational strength (rotational intensity). Accordingly, it is not necessary that the fixing member 2 includes a guide protrusion protruding inwards, as the conventional seat reclining apparatus. Therefore, it is possible to decrease the external size (outside diameter) of the fixing member for this open space. Consequently, it is possible to improve the rotational strength, and simultaneously to decrease the external size (outside diameter) of the seat reclining apparatus.

Next, the operation lever 26 is operated for varying the pivot angle of the seat back, so that the cam 6 is pivoted in the clockwise direction against the urging force of the spiral springs 7. Consequently, the cam surfaces 14a of the release plate 14 integrally rotating with the cam 6 presses the protruding portions 4e, and the pair of the lock teeth 4 are moved in the radially inward direction toward the central portion. Therefore, the external teeth 4a of the lock teeth 4 are away from (disengaged from) the internal tooth 3a of the pivot member 3. Accordingly, the seat back is released, and it is possible to pivot the seat back to freely vary the angle of the seat back.

In the seat reclining apparatus according to the first embodiment of the present invention, the lock teeth 4 are linearly moved in the radially outward direction by the pivot movement of the cam 6. Consequently, the external teeth 4a of the lock teeth 4 are engaged with the internal tooth 3a of the pivot member 3, so that the pivot member 3 is locked with respect to the fixing member 2.

Moreover, the guide grooves 2a are formed on the inside surface of the fixing member 2 by the embossing and so on, so that the raised portions 2d are necessarily formed on the outside surface of the fixing member 2. Accordingly, it is possible to use the raised portions 2d as the rotation prevention portions in a case in which the fixing member 2 is connected with (mounted to) the cushion side arm 23 of the seat cushion 21. Accordingly, it is not necessary that there is provided another raised portion located on the outside surface of the fixing member 2.

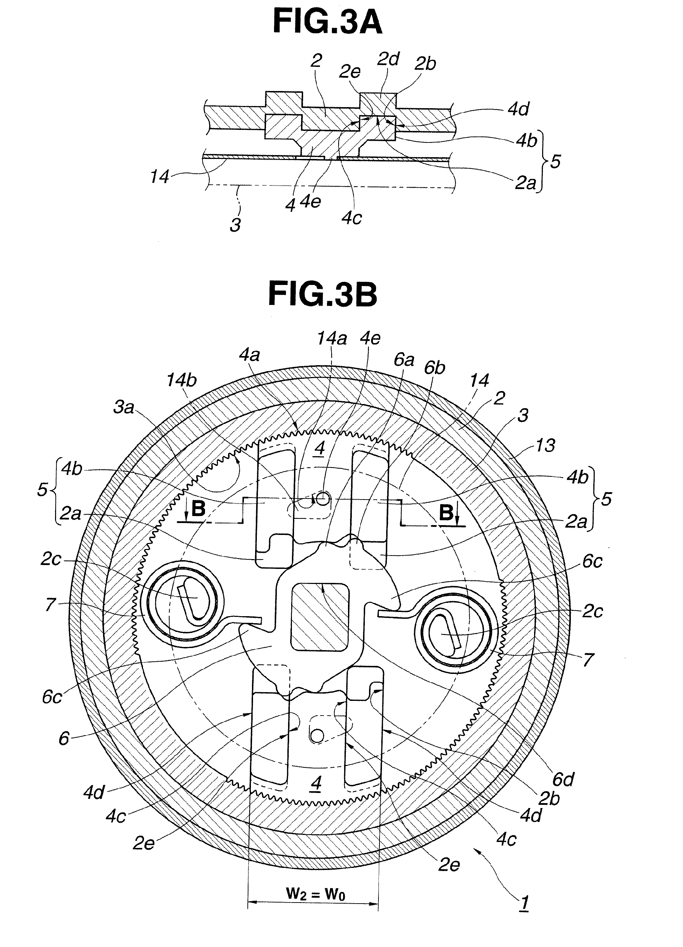

[Second Embodiment] FIG. 3A is a view as viewed from an arrow B-B of FIG. 3B. FIG. 3B is a partially cutaway front view showing a seat reclining apparatus according to a second embodiment of the present invention. Next, a seat reclining apparatus according to a second embodiment is illustrated. The following explanation is directed only to points different from the first embodiment, and repetitive explanation is omitted as to similar component parts to which the same reference numerals are given.

As shown in FIG. 3B, the entire of the pair of the guide protrusions 4b are integrally provided inside a portion (W0) in which the external tooth of the lock tooth 4 are formed. Therefore, each of the lock teeth 4 has a width W2 identical to a tooth width W0 of a portion in which the external tooth 4a of the lock tooth 4 is formed (W2=W0).

In the seat reclining apparatus according to the second embodiment of the present invention, the pair of the guide protrusions 4b are formed inside the portion in which the external tooth of the lock tooth 4 is formed. Therefore, it is possible to decrease the circumferential width (W2) of the lock teeth 4. Moreover, an angle in the circumferential direction which is occupied by the lock tooth 4 is decreased when the lock tooth 4 is disposed to the fixing member 2 in the circumferential direction. Consequently, it is possible to increase the number of the lock teeth 4 disposed in the circumferential direction. Accordingly, it is possible to further improve the rotational strength, and to decrease the external size (the outside diameter) of the recliner 1.

In the seat reclining apparatus according to the second embodiment of the present invention, the entire of two guide protrusions 4b are formed inside the tooth width W0 of the external tooth 4a of the lock tooth 4. However, one of the guide protrusions 4b may be formed inside the tooth width W0 of the external tooth 4a of the lock tooth 4, and the other of the guide protrusions 4b may be formed outside the tooth width W0 of the external tooth 4a of the lock tooth 4, like the seat reclining apparatus according to the first embodiment. Moreover, the entire of at least one of the guide protrusions 4b is not formed inside the tooth width W0 of the external tooth 4a of the lock tooth 4. A part of the at least one of the guide protrusions 4b may be formed inside the tooth width W0 of the external tooth 4a of the lock tooth 4.

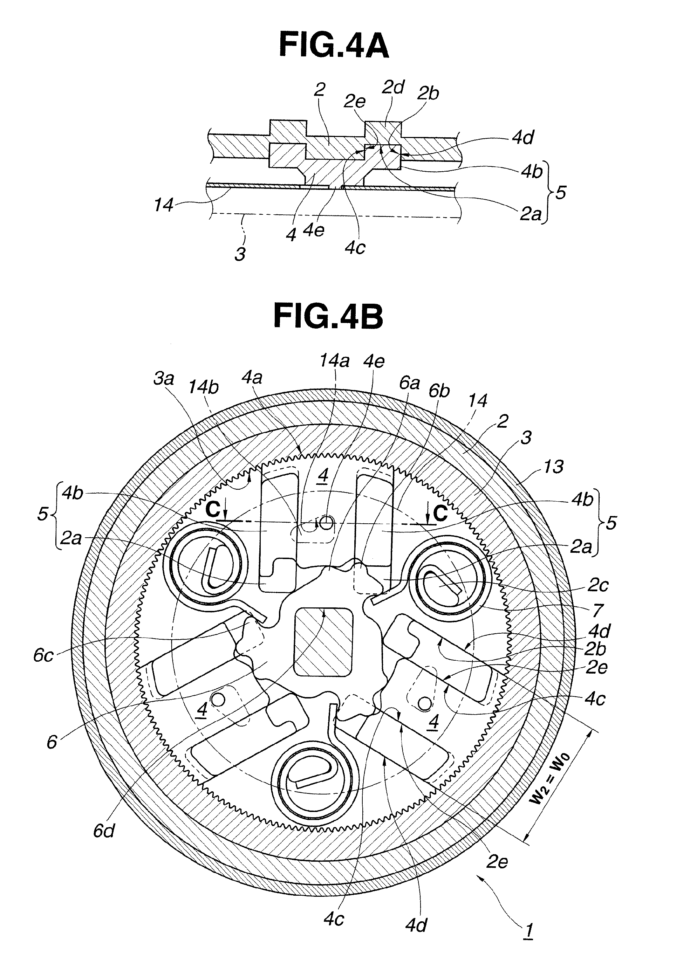

[Third Embodiment] FIG. 4 is a view as viewed from an arrow C-C of FIG. 4B. FIG. 4B is a partially cutaway front view showing a seat reclining apparatus according to a third embodiment of the present invention. Next, a seat reclining apparatus according to a third embodiment is illustrated. The following explanation is directed only to points different from the second embodiment, and repetitive explanation is omitted as to similar component parts to which the same reference numerals are given.

In the seat reclining apparatus according to the third embodiment of the present invention, each of the lock teeth has an overall width W2 identical to the tooth width W0 of the external tooth 4a (W2 =W0). The lock teeth 4 are arranged in the circumferential direction at the regular intervals.

The lock tooth 4 has the small width W2. Accordingly, even when the spiral spring 7 is disposed between adjacent two of the lock teeth 4, three lock teeth 4 can be arranged in the circumferential direction at the regular intervals. In this example, the number of the lock teeth 4 increases, and accordingly it is possible to considerably improve the rotational strength of the recliner 1.

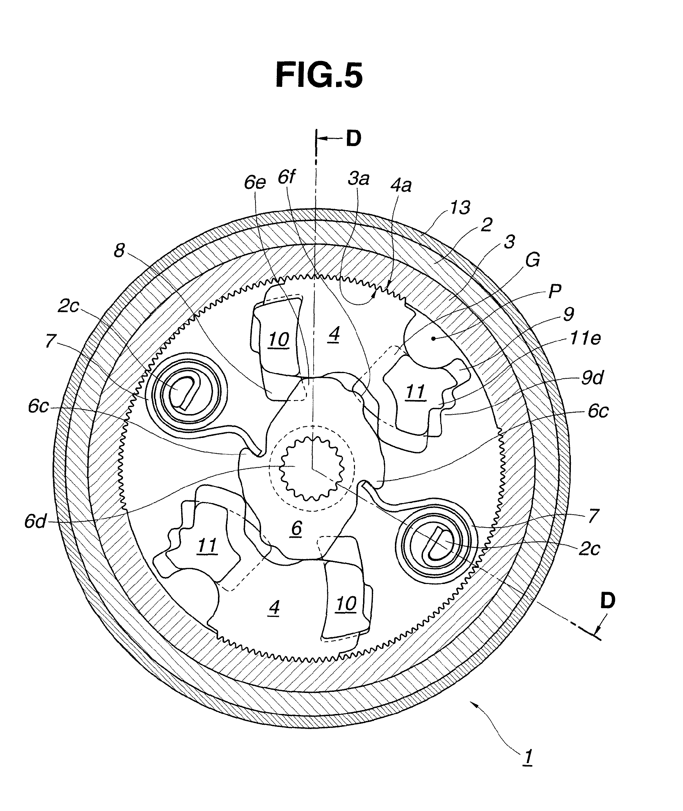

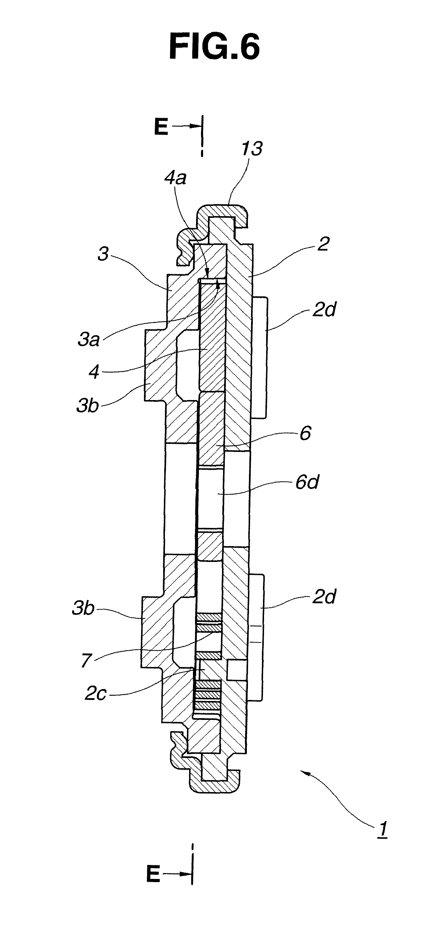

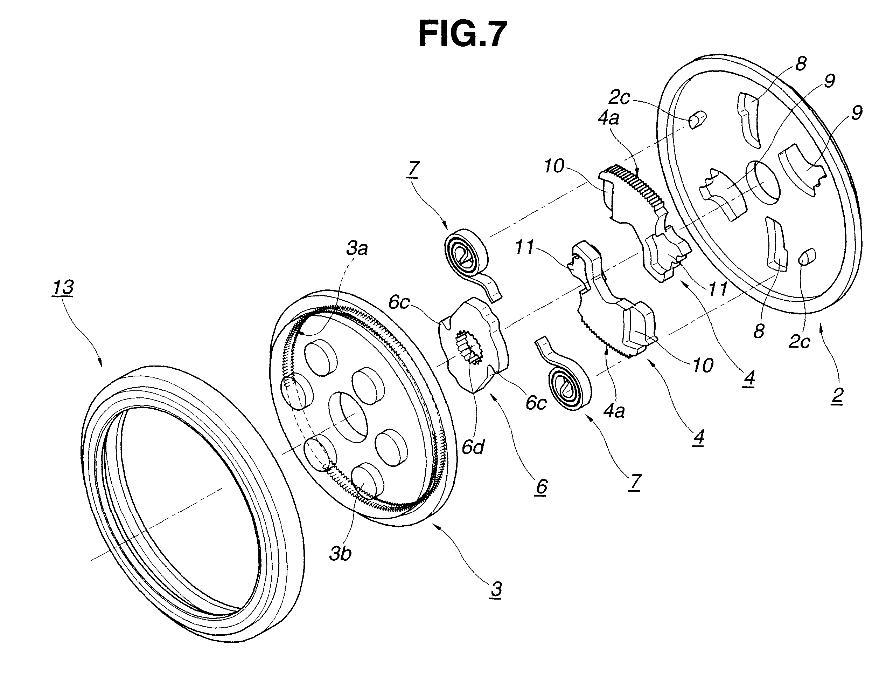

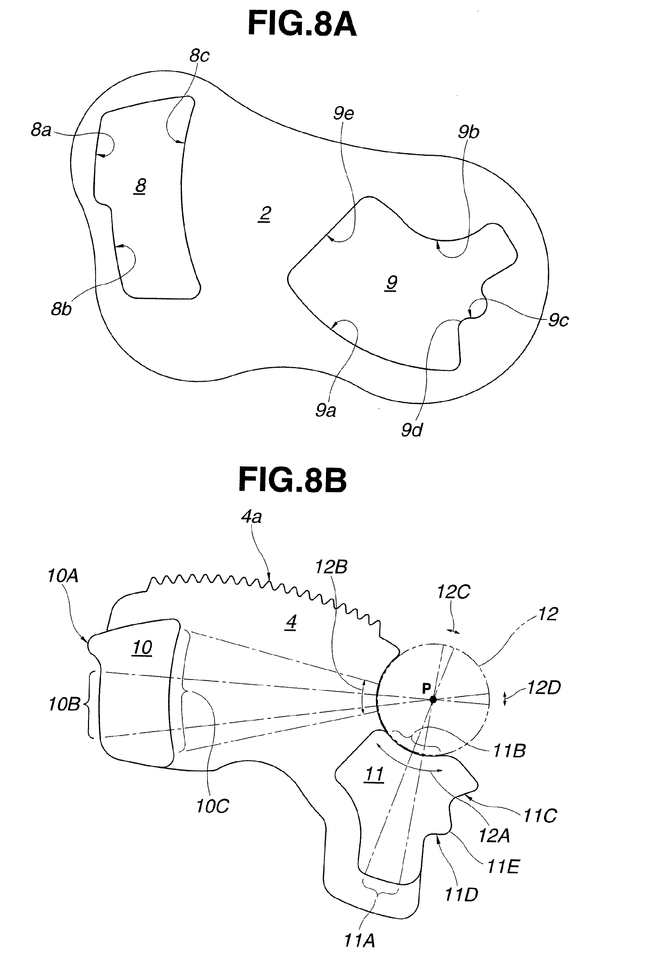

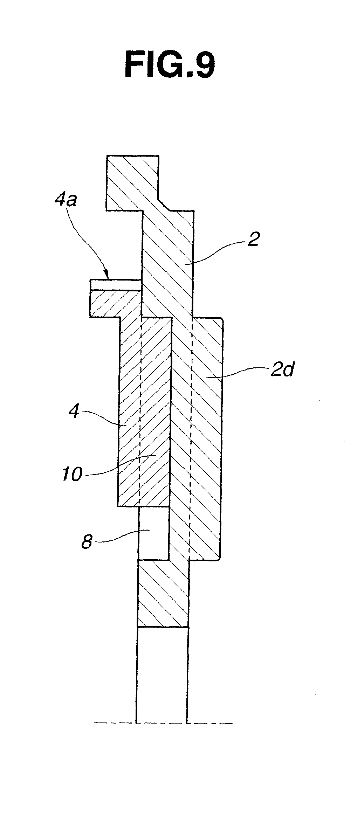

[Fourth Embodiment] FIG. 5 is a partially cutaway front view showing a seat reclining apparatus according to a fourth embodiment of the present invention, as viewed from an arrow E-E of FIG. 6. FIG. 6 is a view showing the seat reclining apparatus of FIG. 5, as viewed from an arrow D-D of FIG. 5. FIG. 7 is an exploded perspective view showing the seat reclining apparatus of FIG. 5. FIG. 8A is an enlarged view showing guide grooves 8 and 9 of the seat reclining apparatus of FIG. 5. FIG. 8B is an enlarged view showing a lock tooth 4 of the seat reclining apparatus of FIG. 5. FIG. 9 is a sectional view showing a main part of the seat reclining apparatus of FIG. 5.

In the seat reclining apparatus according to the first to third embodiments of the present invention, the lock tooth is moved in the linear orbit along the radial direction of the fixing member. On the other hand, in the seat reclining apparatus according to the fourth embodiment of the present invention, the lock tooth is moved in an arc around a portion near and inside the internal tooth of the pivot member. Next, the seat reclining apparatus according to the fourth embodiment is illustrated. The following explanation is directed only to points different from the first to third embodiments, and repetitive explanation is omitted as to similar component parts to which the same reference numerals are given.

As shown in FIGS. 5-9, each of the lock teeth 4 is arranged to be swung along the arc around a swing center P located near and inside the inner circumference surface of the circular recessed portion formed with the internal tooth 3a of the pivot member 3. Therefore, the fixing member 2 includes two pairs of two guide grooves 8 and 9 each of which is shaped like an arc around the swing center P, and each of which is formed on the inside surface of the fixing member 2. On the other hand, each of the lock teeth 4 includes a pair of guide protrusions 10 and 11 integrally formed on both sides of the external tooth 4a of the lock tooth 4 to sandwich the external tooth 4a. A part of the guide protrusion 10 is located inside the tooth width of the external tooth 4a. The guide protrusion 10 protrudes axially toward the fixing member 2. The guide protrusion 10 is mounted in the guide groove 8 of the fixing member 2. The guide protrusion 11 is located outside the tooth width of the external tooth 4a. The guide protrusion 11 is disposed so that a line connecting the swing center P and the guide protrusion 10 and a line connecting the swing center P and the guide protrusion 11 forms 90 degrees. The guide protrusion 11 protrudes axially toward the fixing member 2. The guide protrusion 11 is mounted in the guide groove 9 of the fixing member 2. As shown in FIG. 8A, the guide groove 8 includes arc inner walls 8a, 8b and 8c each of which is shaped like an arc around the swing center P, and each of which serves as the guide surface. The guide groove 9 includes arc inner walls 9a and 9b each of which is shaped like an arc around the swing center P, and each of which serves as the guide surface. On the other hand, as shown in FIG. 8B, the guide protrusion 10 has arc side surfaces 10B and 10C each of which is shaped like an arc around the swing center P, each of which serves as the guide surface. The arc side surfaces 10B and 10C confront, respectively, the arc inner walls 8b and 8c of the guide groove 8, and are arranged to be slid, respectively, with the arc inner walls 8b and 8c. The guide protrusion 11 includes arc side surfaces 11A and 11B each of which is shaped like an arc around the swing center P, each of which serves as the guide surface. The arc side surfaces 11A and 11B confront, respectively, the arc inner walls 9a and 9b of the guide groove 9, and are arranged to be slid, respectively, with the arc inner walls 9a and 9b. The guide protrusion 10 includes a protrusion 10A which is located between the external tooth 4a and the arc side surface 10B, and which protrudes in a direction to confront the arc inner wall 8a of the guide groove 8. The protrusion 10A of the guide protrusion 10 is arranged to be abutted on the arc inner wall 8a when the external force in the counterclockwise direction of FIG. 5 is acted through the pivot member 3 to the lock tooth 4 and thereby the arc side surface 10B is pushed to the arc inner wall 8b. With this, the protrusion 10A of the guide protrusion 10 is arranged to decrease the movement of the lock tooth 4 toward the cam 6 in the radially inward direction. Moreover, a part of the guide protrusion 10 is located inside the portion in which the external tooth 4a of the lock tooth 4 is formed. That is, the part of the guide protrusion 10 is located inside (right side of) an end portion of the portion in which the external tooth 4a is formed. The residual portion of the guide protrusion 10 is located outside (left side of) the portion in which the external tooth 4a is formed.

These pair of the guide protrusions 10 and 11 are disposed so that the line connecting the swing center P and the guide protrusion 10 and the line connecting the swing center P and the guide protrusion 11 forms the substantially 90 degrees (the guide protrusions 10 and 11 are disposed around the swing center P at regular interval of 90 degrees). Moreover, the guide protrusions 10 and 11 include, respectively, a pair of arc side surfaces 10B and 10C and a pair of arc side surfaces 11A and 11B which slidably contact, respectively, the guide grooves 8 and 9. Even when the force is acted to the lock tooth 4 from any directions of 360 degrees in the circumferential direction, the arc side surfaces 10B, 10C, 11A and 11B of the guide protrusions 10 and 11 abut, respectively, on the arc inner walls 8b, 8c, 9a and 9b of the guide grooves 8 and 9, in the four directions, at regular intervals of a substantially 90 degrees. Consequently, the lock tooth 4 is surely supported. That is, as shown in FIG. 8B, if it is assumed that the lock tooth 4 has an imaginary fixed shaft 12 which has an outer circumference surface drawn around the swing center P, the arc side surface 11B of the guide protrusion 11 corresponds to an outer circumference surface 12A of the imaginary fixed shaft 12. The force acted to the lock tooth 4 from the diagonally downward direction is received through the arc side surface 11B of the guide protrusion 11 by the arc inner wall 9b of the guide groove 9. Next, the arc side surface 10C of the guide protrusion 10 corresponds to an outer circumference surface 12B of the imaginary fixed shaft 12. The force acted to the lock tooth 4 from the leftward direction is received through the arc side surface 10C of the guide protrusion 10 by the arc inner wall 8c of the guide groove 8. Next, the arc side surface 11A of the guide protrusion 11 corresponds to an outer circumference surface 12C of the imaginary fixed shaft 12. The force acted to the lock tooth 4 from the diagonally upward direction is received through the arc side surface 11A of the guide protrusion 11 by the arc inner wall 9a of the guide groove 9. Finally, the arc side surface 10B of the guide protrusion 10 corresponds to an outer circumference surface 12D of the imaginary fixed shaft 12. The force acted to the lock tooth 4 from the rightward direction is received through the arc side surface 10B of the guide protrusion 10 by the arc inner wall 8b of the guide groove 8. That is, the four arc inner side walls 10B, 10C, 11A and 11B of the pair of the guide protrusions 10 and 11 are abutted, respectively, on the arc inner walls 8b, 8c, 9a and 9b in the four directions at the regular intervals of the substantially 90 degrees. Accordingly, it is possible to restrict the movement of the lock tooth 4 around the swing center P of the lock tooth 4 in any direction of 360 degrees. Accordingly, it is possible to smoothly move the lock tooth 4, and to restrict the wobble of the lock tooth 4.

The guide groove 9 includes a backup inner wall 9c formed on one of side surfaces between the arc inner walls 9a and 9b; and a stepped portion 9d formed on the backup inner wall 9c. On the other hand, the guide protrusion 11 includes an abutment surface 11C and a sliding outer circumference surface 11D which are located on a surface confronting the backup inner wall 9c; and a protruding portion 11E located between the abutment surface 11C and the sliding outer circumference surface 11D. When the pivot member 3 is pivoted by the external force in the clockwise direction of FIG. 5, the protruding portion 11E is abutted on the stepped portion 9d before the abutment surface 11C is abutted on the backup surface 9c to eliminate the clearance between the abutment surface 11C and the backup surface 9c. Consequently, the protruding portion 11E receives the reaction force F (not shown) from the stepped portion 9d. The guide protrusion 11 and the guide groove 9 are arranged so that this reaction force F is acted in a direction on the center side of the cam 6 relative to a tangent line from the protruding portion 11E to the arc side surface 11B. Consequently, it is possible to prevent the generation of the bending moment to break a portion between the portion on the external tooth 4a's side of the lock tooth 4 and the portion on the guide protrusion 11's side. That is, when the pivot member 3 is pivoted in the clockwise direction by the external force, the arc side surface 11a of the guide protrusion 11 is pressed toward (against) the arc inner wall 9a of the guide groove 9, and accordingly the reaction force is acted in a direction toward the swing center P. Consequently, the end portion on the opposite side of the external tooth 4a of the lock tooth 4 is pressed in the counterclockwise direction, and the lock tooth 4 may be broken. However, it is possible to prevent this by the above-described structure. Moreover, there are provided the pair of the arc side surfaces 10B and 10C of the guide protrusion 10, and the arc inner walls 8b and 8c of the guide groove 8 which slidably contact the arc side surfaces 10B and 10C. The arc side surfaces 10B and 10C and the arc inner walls 8b and 8c are provided in the radial direction, and arranged on the both sides in the circumferential direction of the pivot member 3. When the pivot member 3 is pivoted in the clockwise direction, the arc side surface 10C is pressed to the arc inner wall 8c, and the reaction force is acted to prevent the pivot movement of the pivot member 3 through the lock tooth 4.

When the external force to pivot the pivot member 3 in the counter clockwise direction is acted in the lock state, the guide protrusion 11 is moved within the guide groove 9, and abutted on the inner wall 9e. Then, the guide protrusion 11 is moved along the inner wall 9e toward the center of the cam 6. The reaction force to disengage the external tooth 4a from the internal tooth 3a may be generated. Therefore, as shown in FIG. 5, there is formed a large clearance G between the guide protrusion 11 and the inner wall 9e of the guide groove 9 to prevent the abutment between the guide protrusion 11 and the inner wall 9e of the guide groove 9 in the lock state. The protrusion 10A and the arc side surface 10B of the guide protrusion 10 are pressed on the arc side walls 8a and 8b of the guide groove 8, so that the reaction force is generated. This reaction force is acted through the lock tooth 4 to the pivot member 3 to prevent the pivot movement of the pivot member 3 in the counterclockwise direction.

Moreover, as shown in FIG. 7, the fixing member 2 includes spring hanging raised portions 2c which are located on the inside surface of the fixing member 2, and which protrude, like the first to third embodiments. Each of the spiral springs 7 includes a first end hung around one of the spring hanging raised portions 2c, and a second end hung around one of the spring hanging raised portions 6c which are formed on the cam 6 at opposite positions with respect to the center hole 6d (which are arranged at intervals of 180 degrees).

The fixing member 2 includes the guide grooves 8 and the guide grooves 9 formed on the inside surface of the fixing member 2 by the embossing, like the first to third embodiments. Therefore, the fixing member 2 includes raised portions 2d formed on the outside surface of the fixing member 2. Each of the raised portions 2d of the fixing member 2 serve as a rotation prevention portion in a case in which the fixing member 2 is connected with (mounted to) the cushion side arm of the seat cushion. As shown in FIGS. 6 and 7, the pivot member 3 includes raised portions 3b which are formed on an outside surface of the pivot member 3, and each of which serves as a rotation prevention portion when the pivot member 3 is connected with (mounted to) the back side arm.

In the seat reclining apparatus according to the fourth embodiment of the present invention, the cam 6 includes a lock portion 6e and a lock release portion 6f in place of the pressing portions 6a and 6b of the seat reclining apparatus according to the first to third embodiments. Moreover, the operation shaft (not shown) is inserted into and connected with the central hole 6d of the cam 6 by the press fitting. The operation shaft is provided with the operation lever for rotating the cam 6 against the urging forces of the spiral springs 7 in the clockwise direction (in the lock release direction), like the seat reclining apparatus of FIG. 2.

Next, the operation is illustrated. In the seat reclining apparatus according to the fourth embodiment, the lock tooth 4 is moved in the radially outward direction along the arc around the swing center P when the cam 6 is pivoted in the counterclockwise direction. Consequently, the external tooth 4a of the lock tooth 4 is engaged with the internal tooth 3a of the pivot member 3, so that the pivot member 3 is locked with respect to the fixing member 2. When the lock tooth 4 is swung along the arc, the arc side surfaces 10B and 10C of the guide protrusion 10 are slid, respectively, the arc inner walls 8b and 8c of the guide groove 8, and the arc side surfaces 11A and 11B of the guide protrusion 11 are slid, respectively, with the arc inner walls 9a and 9b of the guide groove 9.

Moreover, the four arc side surfaces 10B, 10C, 11A and 11B of the pair of the guide protrusions 10 and 11 are abutted, respectively, on the arc inner walls 8b, 8c, 9a and 9b of the guide grooves 8 and 9. Accordingly, the lock tooth 4 is supported in the four directions around the swing center P at regular intervals of substantially 90 degrees, so that the lock tooth 4 is restricted to move in any circumferential directions around the swing center P. Therefore, the lock tooth 4 can be smoothly swung, and it is possible to suppress the wobble of the lock tooth 4.

Furthermore, at least the guide protrusion 10 slidably contacts the arc inner walls 8b and 8c of the guide groove 8, on the both sides of the circumferential direction of the pivot movement of the pivot member 3. Accordingly, the guide protrusion 10 and the guide groove 8 prevent the pivot movement of the pivot member 3 in any direction in the lock state.

When the pivot member 3 is pivoted by the external force in the clockwise direction of FIG. 5, the arc side surface 10C of the guide protrusion 10 is supported by the arc inner wall 8c of the guide groove 8, and the arc side surface 11A and the protruding portion 11E of the guide protrusion 11 are supported by the inner wall 9a and the backup inner wall 9c of the guide groove 9. Accordingly, the pair of the guide protrusions 10 and 11 and the pair of the guide grooves 8 and 9 prevent the movement of the pivot member 3. Therefore, it is possible to considerably improve the rotational strength of the recliner 1.

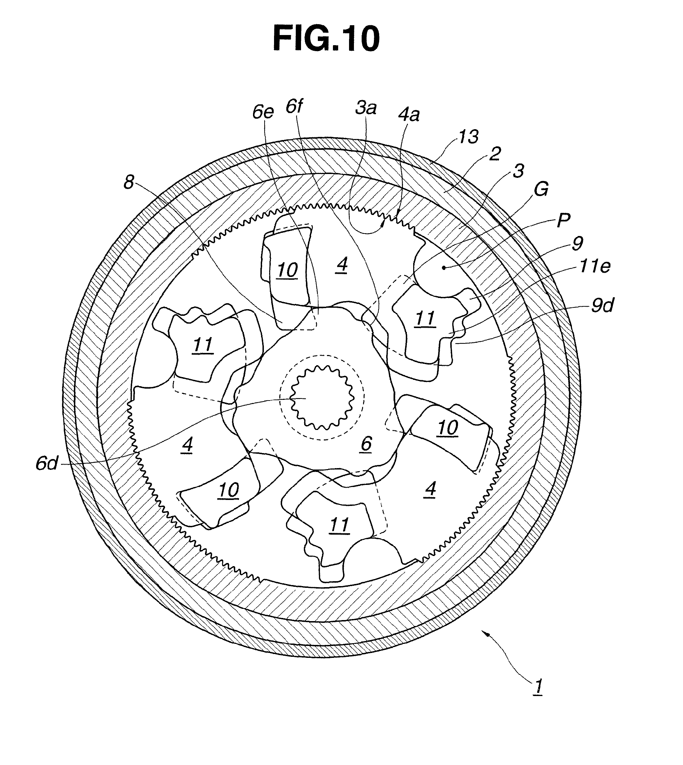

[Fifth Embodiment] FIG. 10 is a partially cutaway view showing a seat reclining apparatus according to a fifth embodiment of the present invention. Next, the seat reclining apparatus according to the fifth embodiment is illustrated. The following explanation is directed only to points different from the fourth embodiment, and repetitive explanation is omitted as to similar component parts to which the same reference numerals are given.

The seat reclining apparatus according to the fourth embodiment includes the two lock teeth. The seat reclining apparatus according to the fifth embodiment includes three lock teeth. In this example, spiral springs (not shown) arranged to urge the cam 6 are disposed between the pivot member and the cam 6 in the axial direction. Each of the spiral spring includes a first end retained by the cam 6, and a second end retained by the fixing member 2.

In the seat reclining apparatus according to the fourth and fifth embodiments, a part of one of the guide protrusions is provided inside the side surface of the portion in which the external tooth of the lock tooth is formed. However, the entire of the guide protrusion may be formed inside the side surface of the portion in which the external tooth of the lock tooth is formed. Moreover, the entire of the guide protrusion may be formed outside the side surface of the portion in which the external tooth of the lock tooth is formed. Moreover, the guide grooves are formed on the inside surface of the fixing member, and consequently the raised portions are formed on the outside surface of the fixing member. The raised portions serve as the rotation prevention portions when the fixing member is connected with (mounted to) the seat cushion or the seat back. Moreover, it is optional to provide another rotation prevention portion which is different from the raised portions of the outside surface of the fixing member formed by forming the guide grooves, and which protrudes from the outer surface. Furthermore, in the seat reclining apparatus according to the fourth and fifth embodiments, the four side surfaces of the pair of the guide protrusions are abutted on the four inner walls of the guide grooves. However, it is sufficient that there are three pairs of the side surfaces and the inner walls which are abutted on each other since each guide surface has the sufficient width.
The three pairs of the side surfaces and the inner walls are arranged so that an angle formed by the adjacent two of the guide surfaces is set smaller than 160 degrees. With this, it is possible to support the lock tooth from at least three directions in the circumferential directions, and thereby to restrict the movement of the lock tooth. Moreover, in the seat reclining apparatus according to the embodiments, the fixing member of the recliner is fixed to the seat cushion, and the pivot member is fixed to the seat back. However, the fixing member of the recliner may be fixed to the seat back, and the pivot member may be fixed to the seat cushion.

The seat reclining apparatus according to the embodiments of the present invention includes a fixing member (2) connected with one of a seat cushion (21) and a seat back (22) pivotally fixed to the seat cushion (21); a pivot member (3) connected with the other of the seat cushion (21) and the seat back (22), and arranged to be pivoted relative to the fixing member (2), the pivot member (3) including a circular recessed portion having an internal tooth (3a) located on an inner circumference surface of the circular recessed portion; a lock tooth (4) disposed between the pivot member (3) and the fixing member (2), the lock tooth (4) having an external tooth (4a) arranged to be engaged with the internal tooth (3a) of the pivot member (3), the lock tooth (4) being arranged to be moved along an orbit between an engagement position in which the external tooth (4a) of the lock tooth (4) is engaged with the internal tooth (3a) of the pivot member (3), and a disengagement position in which the external tooth (4a) of the lock tooth (4) is disengaged from the internal tooth (3a) of the pivot member (3); a cam (6) arranged to rotate in a lock direction to lock the pivot movement of the pivot member (3) relative to the fixing member (2) to push the lock tooth (4) along the orbit to engage the external tooth (4a) of the lock tooth (4) with the internal tooth (3a) of the pivot member (3), and to rotate in a lock release direction to release the lock of the pivot movement of the pivot member (3) relative to the fixing member (2); an urging member (7) arranged to urge and rotate the cam (6) in the lock direction; and an operation lever (26) arranged to rotate the cam (6) in the lock release direction against the urging force of the urging section, the lock tooth (4) including a pair of guide protrusions (4b;10,11) which are disposed on both sides of the lock tooth (4), and which protrude axially toward the fixing member (2), and the fixing member (2) including a pair of guide grooves (2a;8,9) formed on an inside surface of the fixing member (2), and arranged to receive, respectively, the guide protrusions (4b;10,11) of the lock tooth (4) to guide the lock tooth (4) along the orbit between the engagement position and the disengagement position.

In this seat reclining apparatus, when the cam pushes outwards the lock tooth, the pair of the guide protrusions of the lock tooth move along the pair of the guide grooves. The external tooth of the lock tooth is engaged with the internal tooth of the pivot member, so that the pivot member is locked with respect to the fixing member. When the external force is acted to the pivot member in the lock state to pivot the pivot member, this external force is acted through the engagement portions to pivot the lock tooth. Consequently, the inner walls of the pair of the guide grooves support the pair of the guide protrusions. In this case, the shearing force is acted to the guide protrusion, and the compression force is acted to the fixing member. The lock tooth with the external tooth is hardened by the heat treating. The lock tooth has the strength larger than that of the fixing member. Accordingly, the lock tooth has the sufficient strength with respect to the shearing force. On the other hand, the only compression force is transmitted through the guide groove to the fixing member. Therefore, it is possible to have the sufficient strength with respect to the compression force is sufficiently held. Accordingly, in this example, it is possible to improve the rotational strength. Therefore, it is not necessary that the fixing member includes the guide protrusion protruding inwards like the conventional seat reclining apparatus. Therefore, it is possible to decrease the external size (outside diameter) of the fixing member by this open space, and to decrease the external size (outside diameter) of the seat reclining apparatus.

In the seat reclining apparatus according to the embodiments of the present invention, a part or an entire of at least one of the pair of the guide protrusions (4b) is provided inside a portion in which the external tooth (4a) of the lock tooth (4) is formed.

Accordingly, it is possible to decrease the circumferential width of the lock tooth in the circumferential direction. Moreover, it is possible to decrease the angle in the circumferential which is occupied by the lock tooth when the lock tooth is disposed to the fixing member in the circumferential direction. Accordingly, it is possible to increase the number of the lock tooth disposed in the circumferential direction. Therefore, it is possible to further increase the rotational strength, and to decrease the external size (outside diameter) of the seat reclining apparatus.

In the seat reclining apparatus according to the embodiments of the present invention, the fixing member (2) includes raised portions formed on an outside surface of the fixing member (2) by forming the guide grooves (2a;8,9) on the inside surface of the fixing member (2); and each of the raised portions of the fixing member (2) serve as a rotation prevention portion to prevent a rotation when the fixing member (2) is fixed to the seat cushion or the seat back.

Accordingly, the guide grooves are formed on the inside surface of the fixing member by the embossing and so on. Consequently, the raised portions are necessarily formed on the outside surface of the fixing member. Each of the raised portions serves as the rotation prevention portion when the fixing member is fixed to the seat cushion or the seat back. Accordingly, it is not necessary that the fixing member has another raised portion located on the outer surface of the fixing member.

In the seat reclining apparatus according to the embodiments of the present invention, the orbit of the lock tooth (4) is a linear line along the radial direction of the fixing member (2); each of the pair of the guide protrusions (4b) includes an inside guide surface (4c) and an outside guide surface (4d); each of the pair of the guide grooves (2a) includes an inside guide surface (2e) substantially parallel to the inside guide surface (4c) of one of the guide protrusions (4b), and an outside guide surface (2b) substantially parallel to the outside guide surface (4d) of the one of the guide protrusions (4b); and the guide protrusions (4b) and the guide grooves (2a) contact on the inside guide surfaces (4c) of the guide protrusions (4b) and the inside guide surface (2e) of the guide grooves (2a) or on the outside guide surface (4d) of the guide protrusions (4b) and the outside guide surface (2b) of the guide grooves (2a).

Accordingly, the lock tooth is linearly moved in the radially outward direction by the pivot movement of the cam. The external tooth of the lock tooth is engaged with the internal tooth of the pivot member, so that the pivot member is locked with respect to the fixing member.

In the seat reclining apparatus according to the embodiments of the present invention, the orbit of the lock tooth (4) is an arc around a portion near and inside the internal tooth (3a) of the pivot member (3); each of the pair of the guide protrusions (10,11) includes an arc guide surface (10B,10C,11A,11B) which is concentric to the arc of the orbit of the lock tooth (4); each of the pair of the guide grooves (8,9) includes an arc guide surface (8a,8b,9a,9b) which is concentric to the arc of the orbit of the lock tooth (4); and the pair of the guide protrusions (10,11) and the pair of the guide grooves (8,9) contact on the arc guide surfaces (10B,10C,11A,11B) of the pair of the guide protrusions (10,11) and the arc guide surfaces (8a,8b,9a,9b) of the pair of the guide grooves (8,9).

Accordingly, the lock tooth is moved along the arc in the radially outward direction by the pivot movement of the cam, and the external tooth of the lock tooth is engaged with the internal tooth of the pivot member, so that the pivot member is locked with respect to the fixing member.

In the seat reclining apparatus according to the embodiments of the present invention, the pair of the guide protrusions (10,11) are arranged around a center (P) of the arc at a regular interval of substantially 90 degrees; each of the pair of the guide protrusions (10,11) includes a pair of arc guide surfaces (10B,10C,11A,11B) each of which is concentric to the arc of the orbit of the lock tooth (4); each of the pair of the guide grooves (8,9) includes a pair of arc guide surfaces (8a,8b,9a,9b) each of which is concentric to the arc of the orbit of the lock tooth (4); and the pair of the guide protrusions (10,11) and the pair of the guide grooves (8,9) contact on the pair of the arc guide surfaces (10B,10C,11A,11B) of the pair of the guide protrusions (10,11) and the pair of the arc guide surfaces (8a,8b,9a,9b) of the pair of the guide groove.

Accordingly, portions in which the four guide surfaces of the pair of the guide protrusions of the lock tooth and the four guide grooves of the fixing member slidably contact each other are arranged to support the four directions around the center of the orbit of the arc of the lock tooth. Therefore, the lock tooth can be smoothly moved, and it is possible to suppress the wobble of the lock tooth.

In the seat reclining apparatus according to the embodiments of the present invention, at least one of the pair of the guide protrusions (10) includes the pair of the guide surfaces (10B,10C) which are disposed on both sides of the at least one of the pair of the guide protrusions (10) in a circumferential direction of the pivot member (3); at least one of the pair of the guide grooves (8) includes the pair of the guide surface (8b,8c) which are disposed on both sides of the at least one of the pair of the guide grooves (8) in the circumferential direction of the pivot member (3); and the at least one of the pair of the guide protrusions (10) and the at least one of the pair of the guide grooves (8) contact on the pair of the guide surfaces (10B,10C) of the at least one of the pair of the guide protrusions (10) and the pair of the guide surface (8b,8c) of the at least one of the pair of the guide grooves (8).

Accordingly, at least one of the pair of the guide protrusions slidably contacts one of the guide grooves on the both sides of the pivot member in the circumferential direction around the pivot center of the pivot member. Therefore, the at least one of the pair of the guide protrusions and the one of the guide grooves prevent the pivot movement of the pivot member in any directions.

The entire contents of Japanese Patent Application No. 2008-282053 filed October 31, 2008 are incorporated herein by reference.

Although the invention has been described above by reference to certain embodiments of the invention, the invention is not limited to the embodiments described above. Modifications and variations of the embodiments described above will occur to those skilled in the art in light of the above teachings. The scope of the invention is defined with reference to the following claims.

## Claims

1. A seat reclining apparatus comprising:
a fixing member (2) connected with one of a seat cushion (21) and a seat back (22) pivotally fixed to the seat cushion (21);
a pivot member (3) connected with the other of the seat cushion (21) and the seat back (22), and arranged to be pivoted relative to the fixing member (2), the pivot member (3) including a circular recessed portion having an internal tooth (3a) located on an inner circumference surface of the circular recessed portion;
a lock tooth (4) disposed between the pivot member (3) and the fixing member (2), the lock tooth (4) having an external tooth (4a) arranged to be engaged with the internal tooth (3a) of the pivot member (3), the lock tooth (4) being arranged to be moved along an orbit between an engagement position in which the external tooth (4a) of the lock tooth (4) is engaged with the internal tooth (3a) of the pivot member (3), and a disengagement position in which the external tooth (4a) of the lock tooth (4) is disengaged from the internal tooth (3a) of the pivot member (3);
a cam (6) arranged to rotate in a lock direction to lock the pivot movement of the pivot member (3) relative to the fixing member (2) to push the lock tooth (4) along the orbit to engage the external tooth (4a) of the lock tooth (4) with the internal tooth (3a) of the pivot member (3), and to rotate in a lock release direction to release the lock of the pivot movement of the pivot member (3) relative to the fixing member (2);
an urging member (7) arranged to urge and rotate the cam (6) in the lock direction; and
an operation lever (26) arranged to rotate the cam (6) in the lock release direction against the urging force of the urging section,
the lock tooth (4) including a pair of guide protrusions (4b;10,11) which are disposed on both sides of the lock tooth (4), and which protrude axially toward the fixing member (2), and
the fixing member (2) including a pair of guide grooves (2a;8,9) formed on an inside surface of the fixing member (2), and arranged to receive, respectively, the guide protrusions (4b;10,11) of the lock tooth (4) to guide the lock tooth (4) along the orbit between the engagement position and the disengagement position.

2. The seat reclining apparatus as claimed in Claim 1, wherein a part or an entire of at least one of the pair of the guide protrusions (4b) is provided inside a portion in which the external tooth (4a) of the lock tooth (4) is formed.

3. The seat reclining apparatus as claimed in Claim 1, wherein the fixing member (2) includes raised portions formed on an outside surface of the fixing member (2) by forming the guide grooves (2a;8,9) on the inside surface of the fixing member (2); and each of the raised portions of the fixing member (2) serve as a rotation prevention portion to prevent a rotation when the fixing member (2) is fixed to the seat cushion or the seat back.

4. The seat reclining apparatus as claimed in one of Claims 1 to 3, wherein the orbit of the lock tooth (4) is a linear line along the radial direction of the fixing member (2); each of the pair of the guide protrusions (4b) includes an inside guide surface (4c) and an outside guide surface (4d); each of the pair of the guide grooves (2a) includes an inside guide surface (2e) substantially parallel to the inside guide surface (4c) of one of the guide protrusions (4b), and an outside guide surface (2b) substantially parallel to the outside guide surface (4d) of the one of the guide protrusions (4b); and the guide protrusions (4b) and the guide grooves (2a) contact on the inside guide surfaces (4c) of the guide protrusions (4b) and the inside guide surface (2e) of the guide grooves (2a) or on the outside guide surface (4d) of the guide protrusions (4b) and the outside guide surface (2b) of the guide grooves (2a).

5. The seat reclining apparatus as claimed in one of Claims 1 to 3, wherein the orbit of the lock tooth (4) is an arc around a portion near and inside the internal tooth (3a) of the pivot member (3); each of the pair of the guide protrusions (10,11) includes an arc guide surface (10B,10C,11A,11B) which is concentric to the arc of the orbit of the lock tooth (4); each of the pair of the guide grooves (8,9) includes an arc guide surface (8a,8b,9a,9b) which is concentric to the arc of the orbit of the lock tooth (4); and the pair of the guide protrusions (10,11) and the pair of the guide grooves (8,9) contact on the arc guide surfaces (10B,10C,11A,11B) of the pair of the guide protrusions (10,11) and the arc guide surfaces (8a,8b,9a,9b) of the pair of the guide grooves (8,9).

6. The seat reclining apparatus as claimed in Claim 5, wherein the pair of the guide protrusions (10,11) are arranged around a center (P) of the arc at a regular interval of substantially 90 degrees; each of the pair of the guide protrusions (10,11) includes a pair of arc guide surfaces (10B,10C,11A,11B) each of which is concentric to the arc of the orbit of the lock tooth (4); each of the pair of the guide grooves (8,9) includes a pair of arc guide surfaces (8a,8b,9a,9b) each of which is concentric to the arc of the orbit of the lock tooth (4); and the pair of the guide protrusions (10,11) and the pair of the guide grooves (8,9) contact on the pair of the arc guide surfaces (10B,10C,11A,11B) of the pair of the guide protrusions (10,11) and the pair of the arc guide surfaces (8a,8b,9a,9b) of the pair of the guide groove (8,9).

7. The seat reclining apparatus as claimed in Claim 6, wherein at least one of the pair of the guide protrusions (10) includes the pair of the guide surfaces (10B,10C) which are disposed on both sides of the at least one of the pair of the guide protrusions (10) in a circumferential direction of the pivot member (3); at least one of the pair of the guide grooves (8) includes the pair of the guide surface (8b,8c) which are disposed on both sides of the at least one of the pair of the guide grooves (8) in the circumferential direction of the pivot member (3); and the at least one of the pair of the guide protrusions (10) and the at least one of the pair of the guide grooves (8) contact on the pair of the guide surfaces (10B,10C) of the at least one of the pair of the guide protrusions (10) and the pair of the guide surface (8b,8c) of the at least one of the pair of the guide grooves (8).
